# EUROPÄISCHE PATENTSCHRIFT

(11) **EP 2 647 104 B1**
(45) Veröffentlichungstag und Bekanntmachung des Hinweises auf die Patenterteilung: **09.08.2017**
(21) Anmeldenummer: 11788847.9
(22) Anmeldetag: 30.11.2011
(51) Int. Cl.: H02K 3/12, H02K 3/28

(54) **STÄNDERWICKLUNG MIT MEHREREN PHASENWICKLUNGEN**
STATOR WINDING COMPRISING MULTIPLE PHASE WINDINGS
ENROULEMENT DE STATOR COMPORTANT PLUSIEURS ENROULEMENTS DE PHASE

(30) Priorität: 01.12.2010 DE 102010053717
(43) Veröffentlichungstag der Anmeldung: 09.10.2013
(73) Patentinhaber: Robert Bosch GmbH, 70442 Stuttgart (DE)
(72) Erfinder: DIDRA, Steffen, 71679 Asperg (DE); PFLUEGER, Klaus, 71735 Eberdingen (DE); HENNE, Martin, 71696 Moeglingen (DE); HERBOLD, Klaus, 71679 Asperg (DE); SCHWARZKOPF, Christoph, 74399 Walheim (DE); KREUZER, Helmut, 71701 Schwieberdingen (DE)
(86) Internationale Anmeldenummer: PCT/EP2011/071420
(87) Internationale Veröffentlichungsnummer: WO 2012/072698

(56) Entgegenhaltungen:
- EP-A2- 1 124 305
- EP-A2- 1 494 337
- EP-B1- 1 977 497
- US-B1- 6 177 747

## Beschreibung

### Stand der Technik

Aus der EP 1 124 305 A2 ist eine Wechselstrommaschine bekannt, die einen Ständer mit einer Ständerwicklung aufweist. Im selben Nutpaar sind dort Abschnitte eine Phasenwicklung angeordnet.

Aus der US 6177747 B1 ist ebenfalls eine Wechselstrommaschine bekannt, die einen Ständer mit einer Ständerwicklung aufweist. Dabei sind dort Spulenverbinder und Verbinder zweier Spulenseiten parallel geführt.

Aus der EP 1 494 337 A2 ist ein Verfahren zum Herstellen einer zweischichtigen Schleifenwicklung bekannt. Durch Verschwenken werden dabei Schleifenseiten einer Schleife einer Phasenwicklung über Schleifenseiten einer nächsten Schleife derselben Phasenwicklung gelegt. Alle diese Schleifenseiten werden dann in eine Nut gesetzt.

Aus der EP 1977 497 B1 ist eine Anordnung von Phasenwicklungen bekannt, die in Wellenform ausgeführt ist. Die in Wellenformen ausgeführten Drähte sind sowohl in den Nuten als auch im Wickelkopf parallel zueinander geführt.

### Ausführungsformen der Erfindung

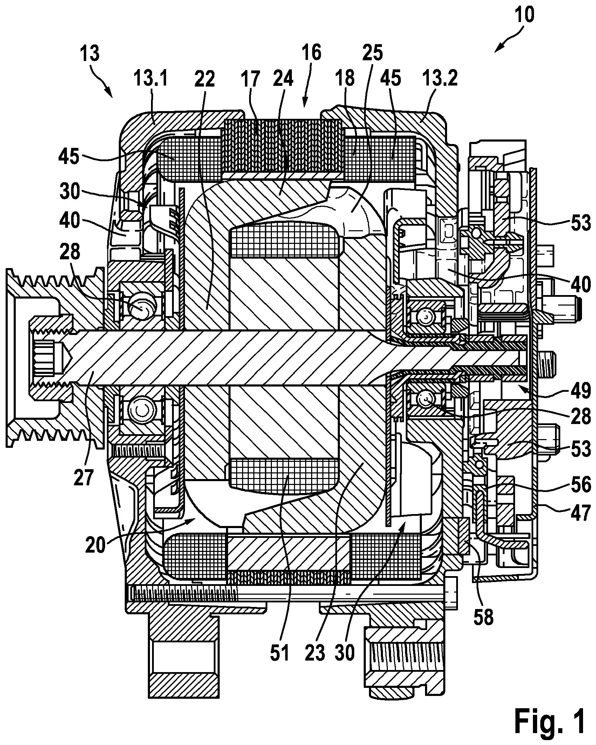

In Figur 1 ist ein Längsschnitt durch eine elektrische Maschine 10, hier in der Ausführung als Generator bzw. Wechselstromgenerator für Kraftfahrzeuge, dargestellt. Diese elektrische Maschine 10 weist u. a. ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichtete, sich axial erstreckende Nuten eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht u. a. aus zwei Klauenpolplatinen 22 und 23, an deren Außenumfang jeweils sich in axialer Richtung erstreckende Klauenpolfinger 24 und 25 angeordnet sind. Beide Klauenpolplatinen 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurch treten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Brückenschaltung darzustellen.

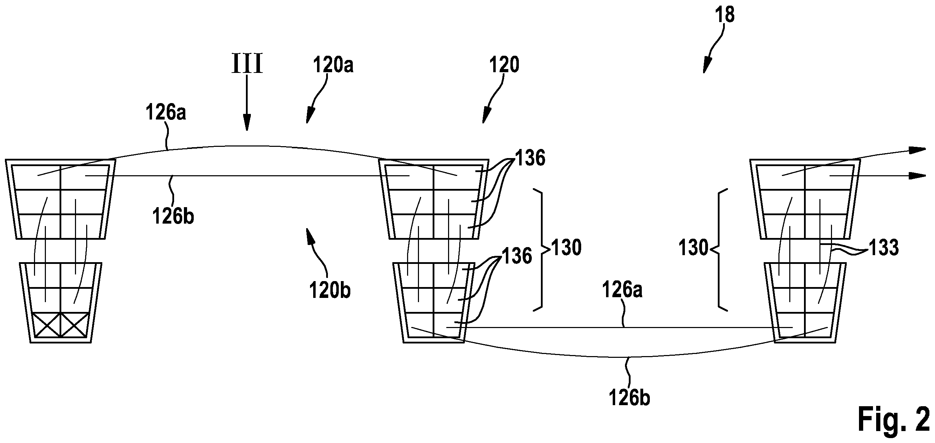

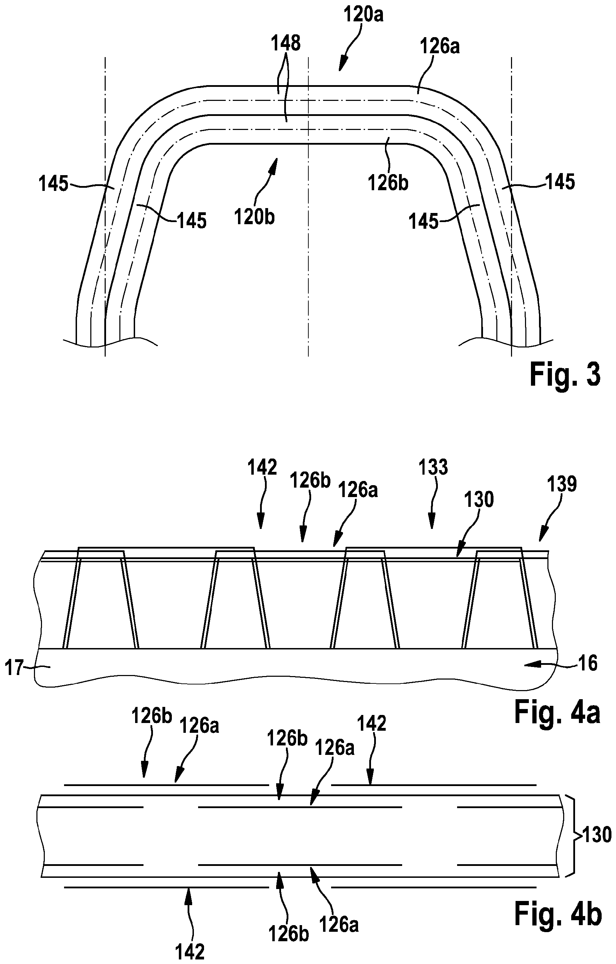

Figur 2 zeigt ausschnittweise eine schematische Seitenansicht auf eine Phasenwicklung 120 einer Ständerwicklung 18 mit mehreren Phasenwicklungen 120. Die Phasenwicklung 120 weist mindestens zwei Teilphasenwicklungen 120a, 120b auf. Die Teilphasenwicklungen 120a, 120b haben Spulen 123 und Spulenverbinder 126a, 126b. Die Spulenverbinder 126 sind parallel geführt. Von im Falle von einer dreiphasigen Ausführung erforderlichen drei Phasenwicklungen 120 ist nur eine gezeigt. Wie aus Figur 3 deutlich wird, sind die zueinander parallel geführten Spulenverbinder 126a, 126b unterschiedlich lang.

In Figur 4a ist eine schematische radiale Ansicht auf einen Ständer 16 gezeigt. Die Ständerwicklung 18 weist einen inneren Wickelkopf 130 auf, der Spulenseitenverbinder 133 aufweist, welche Spulenseiten 136 verbinden, die in Figur 2 symbolisch dargestellt sind. Der inneren Wickelkopf 130 weist eine bestimmte axiale Erstreckung von einem Ständereisen 17 ausgehend auf. Die Spulenverbinder 126 verschiedener Teilphasenwicklungen 120a, 120b kreuzen sich im Wickelkopf 139. Eine dadurch gebildete Kreuzungsstelle 142 ist so weit vom Ständereisen 17 entfernt, dass sich der innere Wickelkopf 130 zwischen der Kreuzungsstelle 142 und dem Ständereisen 17 befindet.

Figur 4b zeigt den Wickelkopf 130 von seiner axialen Seite in einer stark schematischen Weise. Der innere Wickelkopf 130 ist durch zwei durchgehende Linien visualisiert. Spulenverbinder 126a, 126b sind durch einfache Linien dargestellt. Übereinander angeordnete Linien verdeutlichen Kreuzungsstellen 142.

Wie aus Figur 3 deutlich wird, haben die Spulenverbinder 126 eine Trapezform mit je zwei schrägen Abschnitten 145 und dazwischen einem geraden Abschnitt 148.

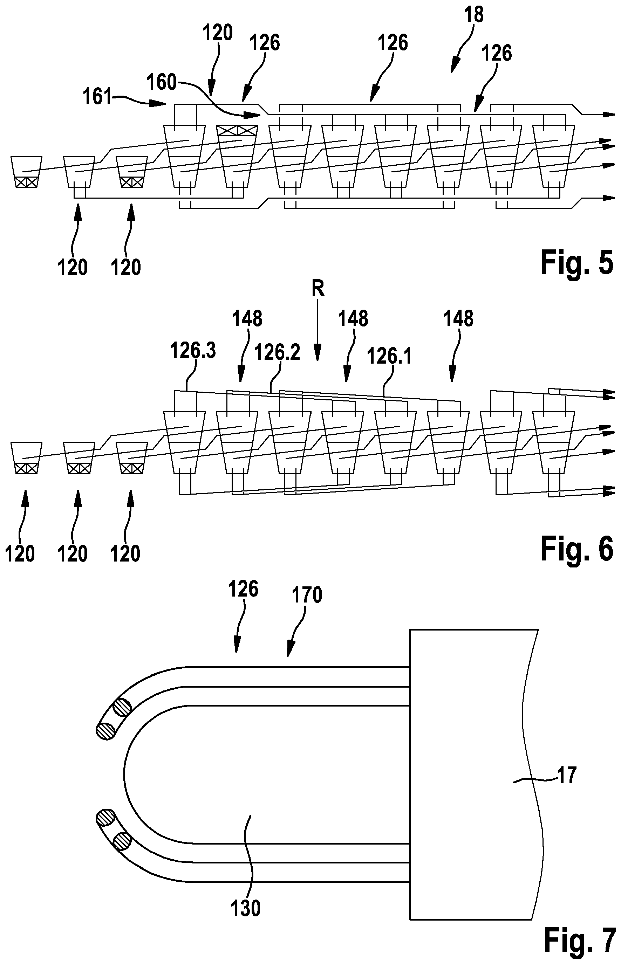

In Figur 5 ist eine etwas deutliche schematische Ansicht einer Ständerwicklung 18 und deren hier drei Phasenwicklungen 120 zu sehen.

Die Spulenverbinder 126 der drei Phasenwicklungen 120 mit ihren geraden Abschnitten 148 sind in zwei radialen Schichten 160, 161 angeordnet. Zwei Paare von Spulenverbindern 126 sind jeweils für sich vollständig in einer inneren 160 und einer äußeren radialen Schicht 161 angeordnet. Die Spulenverbinder 126 einer dritten Phasenwicklung 120 sind sowohl in der inneren 160 als auch in der äußeren radialen Schicht 161 angeordnet.

In Figur 6 ist alternativ zu Figur 5 gezeigt, wie die Spulenverbinder 126 derartig angeordnet sind, dass ein Paar Spulenverbinder 126.1 einer Phasenwicklung 120 am weitesten radial außen angeordnet ist und ein anderes Paar Spulenverbinder 126.3 einer anderen Phasenwicklung 120 mit seinem geraden Abschnitt 148 am weitesten radial innen angeordnet ist, wobei ein weiteres Paar Spulenverbinder 126.2 einer anderen Phasenwicklung 120 in radialer Richtung (R) zwischen den geraden Abschnitten 148 der anderen Phasenwicklungen 120 angeordnet ist.

Aus Figur 7 wird deutlich, dass der innere Wickelkopf 130 nach axial außen (links in der Figur) etwas in beide radiale Richtungen ausgebaucht ist, Ausbauchung 170. Ein Paar Spulenverbinder 126 radial außen, in der Figur oben, ist nach außen verwölbt, um in Richtung zum geraden Abschnitt 148 mit diesem wieder weiter radial innen angeordnet zu sein.

Die Phasenwicklungen 120 bzw. Teilphasenwicklungen 120a bzw. 120b sind aus einem einstückigen Draht gewickelt. D. h. die Teilphasenwicklungen 120a bzw. 120b sind aus je einem isolierten Drahtabschnitt.

## Patentansprüche

1. Ständerwicklung (18) mit mehreren Phasenwicklungen (120), wobei für jede Nut eine Phasenwicklung (120) mindestens zwei Teilphasenwicklungen (120a, 120b) aufweist, wobei die Teilphasenwicklungen (120a, 120b) Spulen (123) und Spulenverbinder (126) haben, und die Spulenverbinder (126) parallel geführt sind, wobei die Ständerwicklung (18) einen inneren Wickelkopf (130) aufweist, der Spulenseitenverbinder (133) aufweist, welche Spulenseiten (136) verbinden und der eine bestimmte axiale Erstreckung von einem Ständereisen (17) ausgehend aufweist und sich Spulenverbinder (126) verschiedener Teilphasenwicklungen (120a, 120b) in einem Wickelkopf (139) kreuzen, wobei eine dadurch gebildete Kreuzungsstelle (142) so weit vom Ständereisen (17) entfernt ist, dass sich der innere Wickelkopf (130) zwischen der Kreuzungsstelle (142) und dem Ständereisen (17) befindet.

2. Ständerwicklung (18) nach Anspruch 1, **dadurch gekennzeichnet, dass** die zueinander parallel geführten Spulenverbinder (126) unterschiedlich lang sind.

3. Ständerwicklung (18) nach einem der vorstehenden Ansprüche, **dadurch gekennzeichnet, dass** die Spulenverbinder (126) eine Trapezform mit je zwei schrägen Abschnitten (145) und dazwischen einem geraden Abschnitt (148) aufweisen.

4. Ständerwicklung (18) nach einem der vorstehenden Ansprüche, **dadurch gekennzeichnet, dass** die Spulenverbinder (126) derartig angeordnet sind, dass ein Paar Spulenverbinder (126) einer Phasenwicklung (120) am weitesten radial außen angeordnet ist und ein anderes Paar Spulenverbinder (126) einer anderen Phasenwicklung (120) mit seinem geraden Abschnitt (148) am weitesten radial innen angeordnet ist, wobei ein weiteres Paar Spulenverbinder (126) einer anderen Phasenwicklung (120) in radialer Richtung (R) zwischen den geraden Abschnitten (148) der anderen Phasenwicklungen (120) angeordnet ist.

5. Ständerwicklung (18) nach einem der vorstehenden Ansprüche 1 bis 3, **dadurch gekennzeichnet, dass** die Spulenverbinder (126) dreier Phasenwicklungen (120) mit ihren geraden Abschnitten (148) in zwei radialen Schichten (160, 161) angeordnet sind, wobei zwei Paare von Spulenverbindern (126) jeweils für sich vollständig in einer inneren und einer äußeren radialen Schicht (160, 161) angeordnet sind und die Spulenverbinder (126) einer dritten Phasenwicklung (120) sowohl in der inneren als auch in der äußeren radialen Schicht (160, 161) angeordnet sind.

6. Ständerwicklung (18) nach einem der vorstehenden Ansprüche, **dadurch gekennzeichnet, dass** radial außen angeordnete Spulenverbinder (126) nach radial außen verwölbt sind, um in Richtung zum geraden Abschnitt (148) mit diesem wieder weiter radial innen angeordnet zu sein.

7. Elektrische Maschine mit einer Ständerwicklung nach einem der vorstehenden Ansprüche.

## Claims

1. Stator winding (18) comprising multiple phase windings (120), wherein a phase winding (120) has at least two phase winding elements (120a, 120b) for each groove, wherein the phase winding elements (120a, 120b) have coils (123) and coil connectors (126), and the coil connectors (126) are routed parallel to one another, wherein the stator winding (18) has an inner end winding (130), which has coil-side connectors (133) which connect coil sides (136), and which has a certain axial extent from a stator core (17), and coil connectors (126) of different phase winding elements (120a, 120b) intersect one another in an end winding (139), wherein an intersection point (142) formed thereby is removed from the stator core (17) by such a distance that the inner end winding (130) is located between the intersection point (142) and the stator core (17).

2. Stator winding (18) according to Claim 1, **characterized in that** the coil connectors (126) which are routed parallel to one another have different lengths.

3. Stator winding (18) according to one of the preceding claims, **characterized in that** the coil connectors (126) have a trapezoidal form with in each case two sloping sections (145) and a straight section (148) therebetween.

4. Stator winding (18) according to one of the preceding claims, **characterized in that** the coil connectors (126) are arranged in such a way that a pair of coil connectors (126) of a phase winding (120) is arranged furthest radially outwards and another pair of coil connectors (126) of another phase winding (120) with its straight section (148) is arranged furthest radially inwards, wherein a further pair of coil connectors (126) of another phase winding (120) is arranged between the straight sections (148) of the other phase windings (120) in the radial direction (R).

5. Stator winding (18) according to one of the preceding Claims 1 to 3, **characterized in that** the coil connectors (126) of three phase windings (120) with their straight sections (148) are arranged in two radial layers (160, 161), wherein two pairs of coil connectors (126) are each arranged completely in an inner and an outer radial layer (160, 161), and the coil connectors (126) of a third phase winding (120) are arranged both in the inner and in the outer radial layer (160, 161).

6. Stator winding (18) according to one of the preceding claims, **characterized in that** radially outer coil connectors (126) are warped radially outward in order to be arranged further radially inwards again with the straight section (148), in the direction toward the straight section (148).

7. Electric machine comprising a stator winding according to one of the preceding claims.

## Revendications

1. Enroulement de stator (18) comportant plusieurs enroulements de phase (120), dans lequel, pour chaque rainure, un enroulement de phase (120) comporte au moins deux enroulements de phase partiels (120a, 120b), dans lequel les enroulements de phase partiels (120a, 120b) présentent des bobines (123) et des connecteurs de bobines (126), et les connecteurs de bobines (126) sont guidés de manière parallèle, dans lequel l'enroulement de stator (18) comporte une tête d'enroulement interne (130), qui présente des connecteurs latéraux de bobines (133) connectant des côtés de bobines (136) et qui présente une extension axiale déterminée à partir du fer de stator (17), et les connecteurs de bobines (126) de différents enroulements de phase partiels (120a, 120b) se croisent dans une tête d'enroulement (139), dans lequel un point de croisement (142) ainsi formé est suffisamment éloigné du fer de stator (17) pour que la tête d'enroulement (130) interne se trouve entre le point de croisement (142) et le fer de stator (17).

2. Enroulement de stator (18) selon la revendication 1, **caractérisé en ce que** les connecteurs de bobines (126) guidés de manière parallèle présentent des longueurs différentes.

3. Enroulement de stator (18) selon l'une quelconque des revendications précédentes, **caractérisé en ce que** les connecteurs de bobines (126) présentent une forme trapézoïdale ayant chacune deux parties obliques (145) et une partie rectiligne (148) entre celles-ci.

4. Enroulement de stator (18) selon l'une quelconque des revendications précédentes, **caractérisé en ce que** les connecteurs de bobines (126) sont agencés de manière à ce qu'une paire de connecteurs de bobines (126) d'un enroulement de phase (120) et à ce qu'une autre paire de connecteurs de bobines (126) d'un autre enroulement de phase (120) dont la partie rectiligne (148) est disposée de manière la plus éloignée radialement vers l'intérieur, dans lequel une paire supplémentaire de connecteurs de bobines (126) d'un autre enroulement de phase (120) est disposée en direction radiale (R) entre les parties rectilignes (148) des autres enroulements de phase (120).

5. Enroulement de stator (18) selon l'une quelconque des revendications 1 à 3 précédentes, **caractérisé en ce que** les connecteurs de bobines (126) de trois enroulements de phase (120) sont disposés de manière à ce que leurs parties rectilignes (148) se trouvent dans deux couches radiales (160, 161), dans lequel deux paires de connecteurs de bobines (126) sont respectivement disposés entièrement dans des couches radiales intérieures et extérieures (160, 161) et les connecteurs de bobines (126) d'un troisième enroulement de phase (120) sont disposés à la fois dans les couches radiales intérieure et extérieure (160, 161).

6. Enroulement de stator (18) selon l'une quelconque des revendications précédentes, **caractérisé en ce que** des connecteurs de bobines (126) disposés radialement vers l'extérieur sont incurvés radialement vers l'extérieur afin qu'ils soient disposés dans la direction de la partie droite (148), cette dernière se trouvant de manière radialement plus éloignée vers l'intérieur.

7. Machine électrique comportant un enroulement de stator selon l'une quelconque des revendications précédentes.
